(19) Europäisches Patentamt / European Patent Office / Office européen des brevets

(11) **EP 0 942 607 B1**

(12) **EUROPEAN PATENT SPECIFICATION**

(45) Date of publication and mention
of the grant of the patent:
**14.05.2008 Bulletin 2008/20**

(51) Int Cl.:
*H04N 5/74* *(2006.01)*    *H04N 5/253* *(2006.01)*
*H04N 3/40* *(2006.01)*

(21) Application number: **99301836.5**

(22) Date of filing: **11.03.1999**

(54) **image projecting apparatus**

Bildprojektionsvorrichtung

Dispositif de projection d'images

(84) Designated Contracting States:
**DE FR GB**

(30) Priority: **12.03.1998 JP 06149598**

(43) Date of publication of application:
**15.09.1999 Bulletin 1999/37**

(73) Proprietor: **Sony Corporation
Tokyo 141 (JP)**

(72) Inventors:
• **Okano, Tadashi,
Intellectual Property Department
Shinagawa-ku,
Tokyo 141 (JP)**

• **Hashimoto, Kunika,
Intell. Property Department
Shinagawa-ku,
Tokyo 141 (JP)**

(74) Representative: **Horner, David Richard et al
D Young & Co
120 Holborn
London EC1N 2DY (GB)**

(56) References cited:
**US-A- 5 528 288**

## Description

The present invention relates to an image projecting apparatus for projecting an image by projecting light onto a recording medium in which the image is recorded.

An image projection converting apparatus called a telecinematography apparatus which converts a movie film in which an image is recorded into a video image is known. Generally the telecinematography apparatus transports a movie film intermittently and projects an image by projecting light onto each of frame images, while performing electronization of the projected image with an image pickup device to convert it into video signals.

According to such image projection converting apparatus, as a wide bandwidth including three colors R (red), G(green), B(blue) and a sufficient light-emission quantity are required for a luminous source, emitting light to be projected onto the movie film, a luminous source such as a xenon lamp, for example, is widely used.

However, in such luminous source, inert gases sealed in a housing produce convection by heat-producing, causing light-quantity variation called flicker. Therefore, the level of light projected onto the movie film varies, resulting in frame-by-frame variation of the intensity level of the projected and picked-up electronic image, i.e. a problem of deterioration of the quality of the obtained image.

The problem does not only relate to an image converting apparatus such as the telecinematography apparatus, but also to a typical projector used in a cinema theater, for example, or to a liquid-crystal image projecting apparatus, configured to project an image formed by a liquid-crystal display device onto a screen.

It is an object of the invention to provide an image projecting apparatus for reducing harmful intensity variation of a projected image.

United States Patent No US-A-5 528 288 discloses an image projecting (telecine) apparatus arranged to perform image projection by projecting light onto a recording medium in the form of a movie film in which an image is recorded, the apparatus comprising:

a luminous body (lamphouse) arranged to emit light along a light path;

an aperture defining mechanism comprising blades that define an aperture and that are movable to shape and decrease or increase the diameter of the light beam passing through the aperture;

a light integrating cylinder having a light entrance port positioned to receive the light beam after it has passed through the aperture, a filter and lenses, the cylinder having a linear exit port through which the light beam is reflected to exit the cylinder as a narrow line of intense, diffuse light which falls on the frames of the movie film, transported past the exit port, and reaches chrominance and luminance pickup devices;

detector means arranged to detect the light-quantity of the light within the light integrating cylinder; and

control means arranged to control the operation of the aperture defining mechanism based upon the result of the detection by the detector means, the blades being low in mass and driven by a high performance motor to allow fast changes in position comparable to film frame scanning rates, whereby, by providing near real time illumination control in the telecine system to adjust the illumination level within one film frame scanning interval, the video system can substitute the scanned image frame data of the previous or succeeding frame in place of the transition frame.

Illumination levels can be changed without the need to stop the film transport system.

The present invention provides an image projecting apparatus according to claim 1 hereof.

The recording medium may be implemented in a number of ways, for example with a movie film.

The control means may be configured to begin the accumulation of the light-quantity detected by the detector means at the point of making the means for opening/closing the light path adopt the opened state, and to make the means for opening/closing the light-path adopt the closed state at the point that the accumulated light-quantity reaches a prescribed value. The control means may also be configured to accumulate the light-quantity detected by the detector means for a given period before making the means for opening/closing the light-path adopt the opened state, while obtaining an opening period of the light-path of the means for opening/closing the light-path based on the accumulated value, and to make the means for opening/closing the light-path be in the opened state for the obtained opening period of the light-bath. The means for opening/closing the light-path may be implemented with a liquid-crystal shutter.

According to an image projecting apparatus of an embodiment of the invention, the light-emission quantity of a luminous body is detected by the means for detecting the light-quantity, and the light-path from the luminous body to the recording medium is closed and opened, based on the result of the detection. Hereby, the accumulated projected light-quantity is regulated to be constant, resulting in avoiding the intensity variation of the projected image caused by light-quantity variation of the luminous body.

The present invention will be described further, by way of example only, with reference to the accompanying drawings, in which:

FIG. 1 is an illustration showing a diagrammatic configuration of an image projection converting apparatus as an image projecting apparatus.
FIG. 2 is a block diagram showing the configuration of the light-quantity regulator shown in FIG. 1.

FIG. 3 is an illustration showing the variation condition of the light-quantity detecting signal outputted from the photosensor of the luminous source apparatus.

FIG. 4 is an illustration showing a diagrammatic configuration of an image projection converting apparatus as an image projecting apparatus according to an embodiment of the invention.

FIG. 5 is an illustration showing the operation timing of the image projection converting apparatus shown in FIG. 4.

FIG. 6 is a flow chart showing the operation of the shutter controller shown in FIG. 4.

FIG. 7 is an illustration showing the operation timing of an image projection converting apparatus as an image projecting apparatus related to another embodiment of the invention.

FIG. 8 is a flow chart showing the operation of shutter controller of the image projection converting apparatus as the image projecting apparatus related to the other embodiment of the invention.

Image projecting apparatuses will now be described in detail with reference to the accompanying drawings.

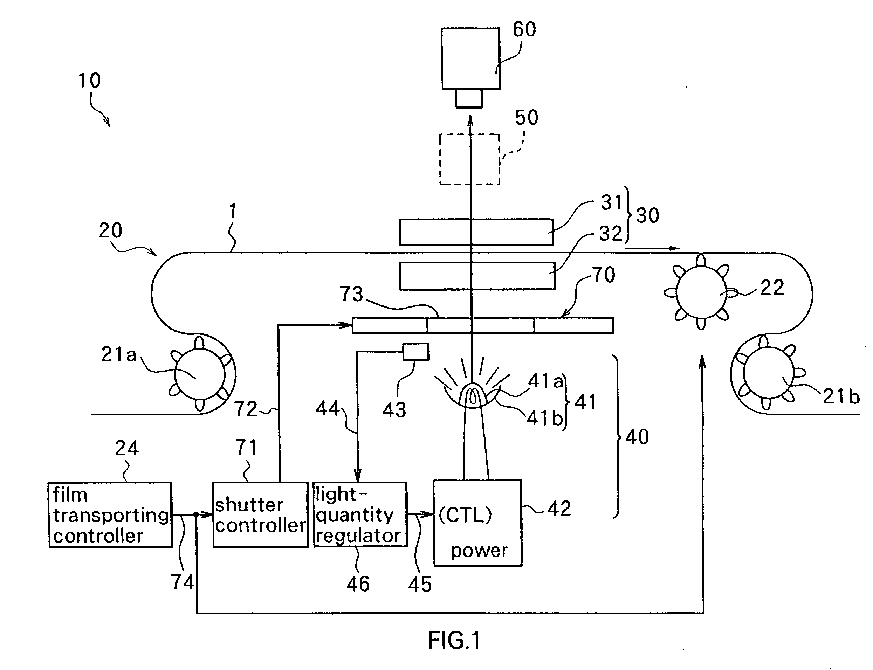

FIG. 1 shows a diagrammatic configuration of an image projecting apparatus that is not an embodiment of the invention and is with a luminous source apparatus. This image projecting apparatus is an image projection converting apparatus having a shooter which is able to convert a projected image into an electronic image signal (video signal), and is called telecinematography apparatus.

The image projection converting apparatus 10 includes: a transporting mechanism 20 so as to intermittently transport movie film 1, in which a series of frame images is recorded at constant intervals; gate section 30 consists of movable picture gate 31 and immovable picture gate 32, arranged below the movable picture gate 31 so as to put the movie film 1 transported by the transporting mechanism 20 in between; the luminous source apparatus 40 so as to project light onto the movie film 1 pausing at a prescribed position of the gate section 30. The movable picture gate 31 is able to move up and down when the movie film 1 is loaded. Openings(not shown in figures) are formed at each gate of the gate section 30, so as to guide the light from the luminous source apparatus 40 to a prescribed area of the movie film 1. The gate section 30 also includes a film position detector(not shown in figures) so as to detect the pausing position of the movie film 1.

The image projection converting apparatus 10 also includes: optical-axis correction/projection-lens section 50 having an optical-axis correction mechanism(not shown in figures) performing optical-axis correction according to the position of the movie film 1 detected from the above-mentioned film position detector of the gate section 30, and a projection lens(not shown in figures) performing condensation of the projected light passed through the gate section 30; shooter 60 constructed of such as a TV camera with an image pickup device such as CCD(charge-coupled device) and which performs electronization of the recorded information of the movie film 1, by shooting the projected image of the movie film 1, projected by the light from the luminous source apparatus 40; and shutter mechanism 70 located between the luminous source apparatus 40 and the gate section 30, which interrupts or allows the light from the luminous source apparatus 40 to reach the movie film 1.

The transporting mechanism 20 is configured with continuously-transporting sprockets 21a, 21b which rotate continuously, and intermittently-transporting sprocket 22 which rotates intermittently. The continuously-transporting sprockets 21a, 21b transport the movie film 1 continuously, while intermittently-transporting sprocket 22 transports the movie film 1 intermittently in a prescribed interval near the gate section 30, according to film driving signal 74 from film transporting controller 24.

The luminous source apparatus 40 includes: light-emission section 41 configured with light-emission lamp 41a such as xenon lamp and reflector 41b; power supply 42 supplying a current to the light-emission lamp 41a; photosensor 43 detecting the light-emission quantity of the light-emission lamp 41a; light-quantity regulator 46 outputting light-quantity regulating signal 45 to regulate the light-emission quantity of the light-emission lamp 41a so as to be constant, based on light-quantity detecting signal 44 outputted from the photosensor 43. The power supply 42 includes a control terminal(CTL), to which the light-quantity regulating signal 45 from the light-quantity regulator 46 is inputted, and which controls a current supplied to the light-emission lamp 41a according to the light-quantity regulating signal 45. The luminous source apparatus 40 corresponds to one example of a luminous source apparatus, the light-emission lamp 41a corresponds to one example of a luminous body the photosensor 43 corresponds to one example of a means for detecting a light-quantity, and the light-quantity regulator 45 corresponds to one example of means for regulating the light-quantity.

Shutter 73 included in shutter mechanism 70 consists of such as a liquid-crystal shutter, and performs opening/closing operation according to shutter opening/closing signal 72 from shutter controller 71. The shutter controller 71 operates in synchronization with the film transporting controller 24.

According to telecinematography apparatus 10 having such configuration, the movie film 1 is transported intermittently by each frame by transporting mechanism 20, and is projected by light from the luminous source apparatus 40, when the film position detector of the gate section 30 detects each frame image of movie film 1 pausing at prescribed position of the gate section 30. To be more specific, the shutter 73 of the shutter mechanism 70 repeats opening and closing in synchronization with intermittently-transporting operation of the movie film 1, performed by intermittently-transporting sprocket 22, in accordance with film driving signal 74 from the film transporting controller 24, and light from the luminous source apparatus 40 is projected onto the movie film 1 passing through the opened shutter 73 of the shutter mechanism 70, only when the movie film 1 is in pause state. Hereby, an image recorded in the movie film 1 is projected onto the shooter 60 through the optical-axis correction/projection-lens section 50. Besides, an exposure time of the movie film 1 is prescribed by the shutter mechanism 70, in order to avoid shifts of image positions, which may occur when the intermittent transportation of the movie film 1 is set to pickup-image timing.

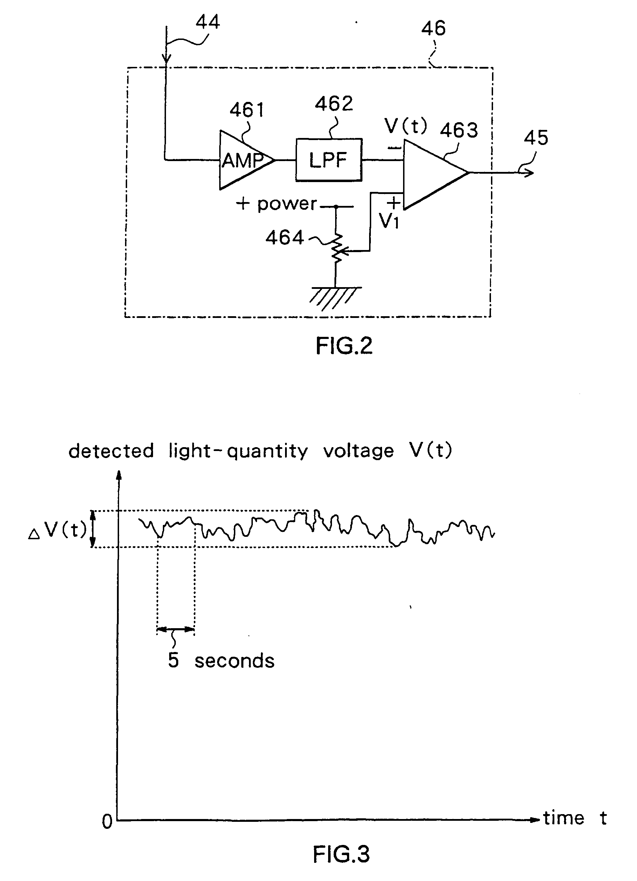

FIG. 2 shows a diagrammatic configuration of the light-quantity regulator 46 shown in FIG. 1. As is shown in the figure, the light-quantity regulator 46 includes: amplifier(AMP) 461 to which the light-quantity detecting signal 44 from the photosensor 43 is inputted; low-pass filter(LPF) 462 connected to the output terminal of the amplifier 461 so as to cut a highfrequency component and only to let a low-frequency component pass through; differential amplifier 463 outputting the light-quantity regulating signal 45 and supplying it to the control terminal of the power supply 42. The minus terminal of the differential amplifier 463 is connected to the output terminal of the low-pass filter 462, and the plus terminal is connected to the movable terminal of potentiometer 464, one end of which is connected to a power supply voltage (+), and another end of which is grounded.

According to the light-quantity regulator 46 having such configuration, the inputted light-quantity detecting signal 44 is amplified in the amplifier, smoothed in the low-pass filter 462, and inputted to the minus terminal of the differential amplifier 463 as detected light-quantity voltage V(t). On the other hand, reference light-quantity voltage V1 set up by the potentiometer 464 is inputted to the plus terminal of the differential amplifier 463. And the differential amplifier 463 outputs the difference between the reference light-quantity voltage V1 and the detected light-quantity voltage V(t), i.e. [V1-V(t)], as the light-quantity regulating signal 45. The V1 is a selected fixed voltage value, while the V(t) is a voltage value which varies accompanying with time (t).

Next, the operation and the effect of the image projection converting apparatus 10 configured as mentioned above will now be described.

FIG. 3 shows the variation of the light-quantity detecting signal 44(namely the light-quantity variation of the light-emission lamp 41a of the luminous apparatus 40) outputted from the photosensor 43. The vertical axis in the figure shows the detected light-quantity voltage V(t), while the horizontal axis shows time. As is shown in the figure, the light-quantity of the light-emission lamp 41a varies enormously in a period of 0.5 to 5 seconds, and the variation quantity $\Delta V(t)$ reaches to about 2~3%. Therefore, when an image is projected by projecting light which includes such variation, onto the movie film 1, a video image obtained through shooter 60 falls in including intensity variation(flicker) resulting in the deterioration of image quality. According to the embodiment, as is described above, the light-emission quantity of the light-emission lamp 41a is detected, and a current supplied from the power supply 42 to the light-emission lamp 41a is regulated according to the detected light-quantity so as to make the light-emission quantity of the light-emission lamp 41a constant. The detailed operation will be described in the following.

First, the whole operation of the image projection converting apparatus 10 will be described. The intermittently-transporting sprocket 22 of the transporting mechanism 20 intermittently transports the movie film 1 by rotating according to the film driving signal 74 from the film transporting controller 24. The shutter 73 of the shutter mechanism 70 is maintained in closed state, while the movie film 1 is transported. When it is detected by the film position detector (not shown in figures) of gate section 30 that each image frame of the movie film 1 paused at the prescribed position of the gate section 30, the shutter 73 of the shutter mechanism 70 is opened following the shutter opening/closing signal 72 from the shutter controller 71, and light from the light-emission lamp 41a of the luminous source apparatus 40 is projected onto the movie film 1 passing through the shutter 73 of the shutter mechanism 70. Hereby, the image recorded in the movie film 1 is projected, and it reaches to the shooter 60 through optical-axis correction and light-gathering by the optical-axis correction/projection-lens section 50. The projected image received by an image pickup device not shown in figures, converted photoelectrically, and recorded in electronic-image recording medium such as a video tape as an electronic image signal(video signal), after passing through various kinds of signal processing circuits. Besides, according to the embodiment, the opening period of the shutter 73 of the shutter mechanism 70 is a fixed period prescribed in advance.

Next, the characteristic operation of the image projection converting apparatus 10 will be described. The light-emission lamp 41a emits light with intensity according to the magnitude of the current supplied from the power supply 42. The photosensor 43 receives the light from the light-emission lamp 41a, outputs a voltage signal according to the light-quantity as the light-quantity detecting signal 44, and inputs it to the light-quantity regulator 46. The light-quantity regulator 46 amplifies the light-quantity detecting signal 44 at the amplifier 461, smoothes the amplified signal by rejecting a high frequency component at the low-pass filter 462, and inputs the filtered signal to the minus terminal of the differential amplifier 463 as the detected light-quantity voltage V(t). The differential amplifier 463 takes the difference between the reference light-quantity voltage V1 and the detected light-quantity voltage V(t), i.e. [V1-V(t)], and outputs it as the light-quantity regulating signal 45, supplying it to the control terminal (CTL) of the power supply 42.

The power supply 42 varies the magnitude of the current provided to the light-emission lamp 41a in a manner to make the level of the inputted light-quantity regulating signal 45 approach zero. To be more specific, when the level of the light-quantity regulating signal 45 is positive, namely when V1>V(t), a current supplied to the light-emission lamp 41a is increased by amount according to the absolute value of the difference [V1-V(t)] and when the light-quantity regulating signal 45 is negative, namely when V1<V(t), a current provided to the light-emission lamp 41a is decreased by amount according to the absolute value of the difference [V1-V(t)].

The light-emission quantity of the light-emission lamp 41a of the luminous source apparatus 40 is regulated to be constant, by performing such control in a prescribed cycle(for example, a few milliseconds cycle). Such light without light-quantity variation like this is projected onto the movie film 1 performing image projection, resulting in obtaining a video signal without flicker by the shooter 60.

According to the image projection converting apparatus 10, the photosensor 43 detecting the light-emission quantity of the light-emission lamp 41a is provided, and the current provided from the power supply 42 to the light-emission lamp 41a according to the light-quantity detecting signal 44 from the photosensor 43 is regulated so as to make the light-emission quantity of the light-emission lamp 41a constant. Therefore, the image obtained by the shooter 60 becomes an image with good quality with a little flicker(intensity variation). And also makes it possible to compensate the light-quantity reduction of the light-emission lamp 41a caused through secular changes.

Next, an embodiment of the invention will now be described.

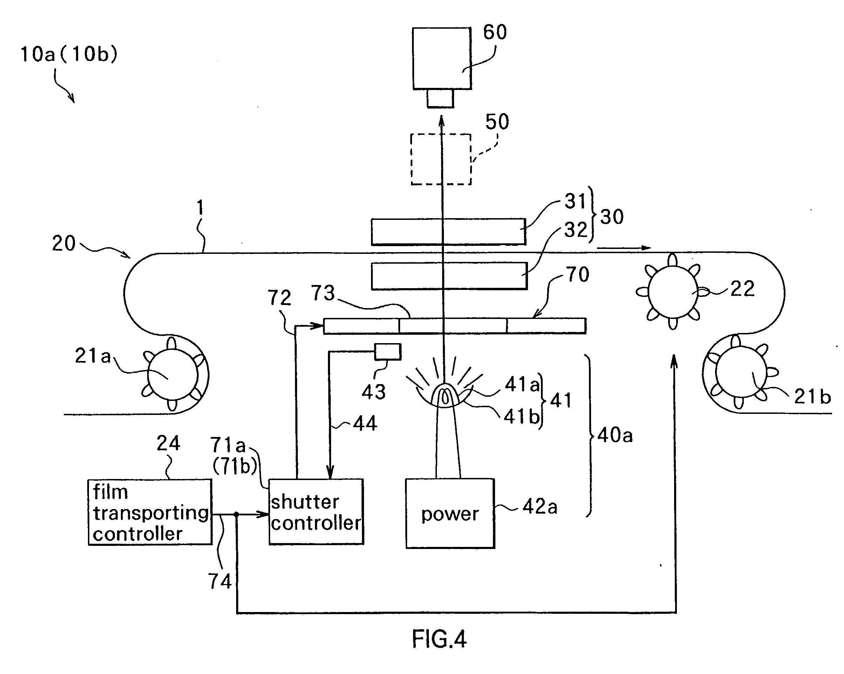

FIG. 4 shows a diagrammatic configuration of an image projection converting apparatus which is an embodiment of the invention. In FIG. 4, the same reference signs as used in the above-mentioned apparatus (FIG.1) represent the same configuration elements, and explanation will be omitted suitably.

According to image projection converting apparatus 10a of the embodiment, the light-quantity detecting signal 44 from the photosensor 43 is inputted to shutter controller 71a. The light-quantity regulator 46 is not provided, and a control terminal is not included in power supply 42a. As will be described, the shutter controller 71a of the embodiment performs control as follows. The shutter controller 71a opens the shutter 73 of the shutter mechanism 70 under control of shutter opening/closing signal 72, according to the film driving signal 74 from the film transporting controller 24. At the same time, the shutter controller 71a begins to integrate the light-quantity detecting signal 44 from the photosensor 43. And the shutter controller 71a closes the shutter 73 of the shutter mechanism 70 when the obtained integral L(t) of light-quantity has reached to a prescribed reference integral L1. Other configurations are as same as the apparatus of FIG.1. The shutter mechanism 70 corresponds to one example of 'the means for opening/closing light-path', and the shutter controller 71a corresponds to one example of the 'means for controlling opening/closing light-path'.

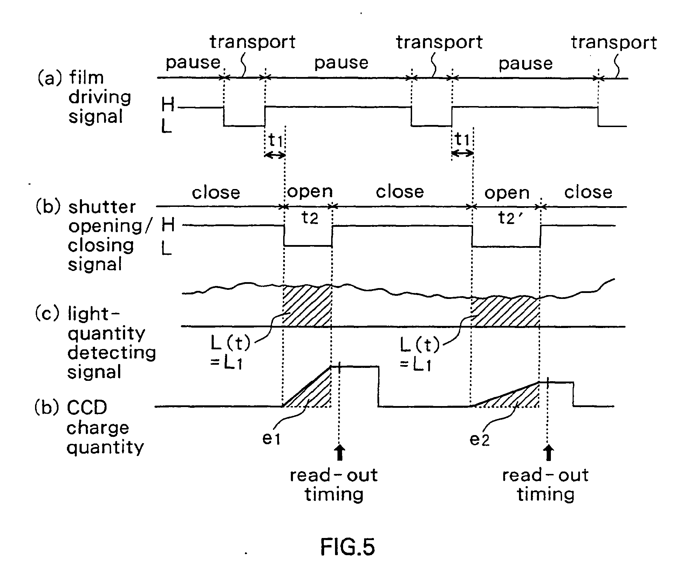

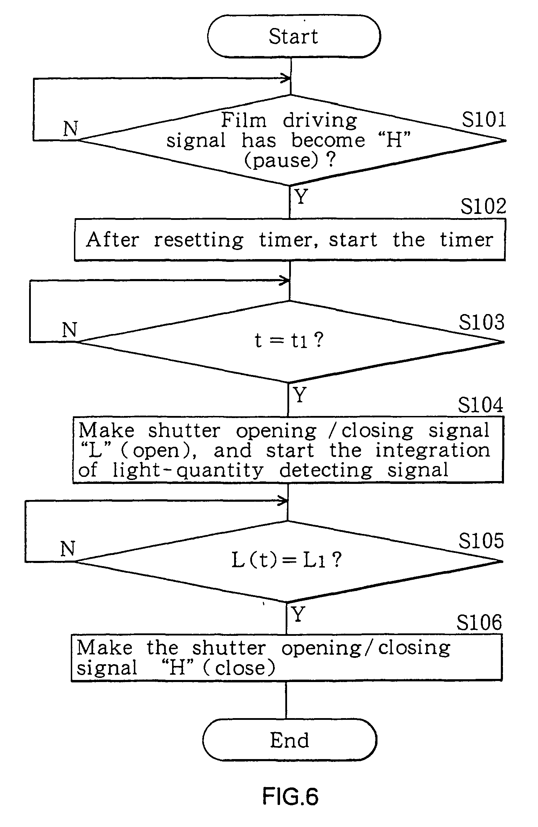

Next, the operation and the effect of the image projection converting apparatus 10a having such configuration will now be described making reference to FIG. 5 and FIG. 6. FIG. 5 shows the operation timing of the image projection converting apparatus 10a. The film driving signal 74 is shown as (a) in the figure, and "H" level zone indicates the pausing state of the movie film 1, while "L" level zone indicates the transporting state. The shutter opening/closing signal 72 is shown as (b) in the same figure, and "H" level zone indicates the closing state of the shutter 73 of the shutter mechanism 70, while "L" level zone indicates the opening state. The variation of the light-quantity detecting signal 44 is shown as (c) in the same figure, while (d) in the same figure shows the accumulated electrical-charge quantity of the pickup device(CCD is supposed here) at the shooter 60 not shown in figures. And FIG. 6 shows the operation of the shutter controller 71a.

When the movie film 1 pauses by changing the film driving signal 74 from "L" level to "H" level (FIG. 6 step S101; Y), the shutter controller 71a resets a timer not shown in figures, and begins time-count operation (step S 102). When the time-count value reaches to a fixed value t1 shown in FIG. 5(b) (step S103; Y), the shutter controller 71a opens the shutter 73 of the shutter mechanism 70 by changing the shutter opening/closing signal 72 from "H" level to "L" level. At the same time, the controller 71a begins the integration of the light-quantity detecting signal 44, and computes the integral L(t) of light-quantity shown as the diagonally shaded area in (c) of FIG. 5(step S104). The integral L(t) of light-quantity corresponds to one example of the accumulated light-quantity' of the invention.

When the shutter 73 of the shutter mechanism 70 is opened, light from the light-emission lamp 41a is projected onto the image frame of the movie film 1, and the image is projected onto the CCD of the shooter 60. Hereby, the accumulation of charge corresponding to the projected image begins in the CCD of the shooter 60 (FIG. 5(d)).

When the integral L(t) of light-quantity obtained through the integration of the light-quantity detecting signal 44 reaches to the reference integral L1(step S 105; Y), the shutter controller 71a changes the shutter opening/closing signal 72 to "H" level, closing the shutter 73 of the shutter mechanism 70(step S 106). The shutter opening period differs depending on the level of the light-quantity detecting signal 44. In other words, when the level of the light-quantity detecting signal 44 is high, the shutter opening period t2 becomes shorter, while the level of the light-quantity detecting signal 44 is low, the shutter opening period t2' becomes longer.

When the shutter 73 of the shutter mechanism 70 is closed, the light from the light-emission lamp 41a is interrupted, and the charge accumulation in the CCD of the shooter 60 finishes. The charge accumulated in the CCD of the shooter 60 is read at the readout-timing in the following (FIG. 5(d)), and outputted as a video signal after passing several kinds of signal processing.

As described above, according to the image projection converting apparatus 10a of the embodiment, the integral L(t) light-quantity is controlled so as to be a constant value(reference integral L1) at all times through the opening/closing operation of the shutter 73 of the shutter mechanism 70. Therefore, the shutter opening period changes according to the light-emission quantity of the light-emission lamp 41a. Hereby, the accumulated exposure quantity(corresponds to one example of the 'accumulated projected light-quantity' of the invention) of the movie film 1 is regulated to be constant, regardless of the magnitude of the light-quantity of the light-emission lamp 41a. As a result, the charge-quantity accumulated in the CCD of the shooter 60 will not be effected by the light-quantity variation of the light-emission lamp 41a, and the accumulated charge-quantity of CCD becomes nearly constant(e1=e2 in FIG.5(d)) at each frame, if the transmissivity of the movie film 1 is constant. Therefore, the video signal obtained through the shooter 60 hardly includes intensity variation(flicker) caused by light-quantity variation of the light-emission lamp 41a. Furthermore, the intensity level of the obtained video signal is maintained constant, even the light-quantity of the light-emission lamp 41a reduces through secular changes.

Another embodiment of the invention will now be described.

Image projection converting apparatus 10b as an image projecting apparatus of the embodiment is provided with shutter controller 71b in place of shutter controller 71a in FIG.4. As will be described, the shutter controller 71b previously integrates the light-quantity detecting signal 44 from the photosensor 43 before opening the shutter 73 of the shutter mechanism 70, and changes the opening period of the shutter 73 of the shutter mechanism 70 according to the magnitude of the obtained integral L(t) of light-quantity. Other configurations are the same with FIG.4.

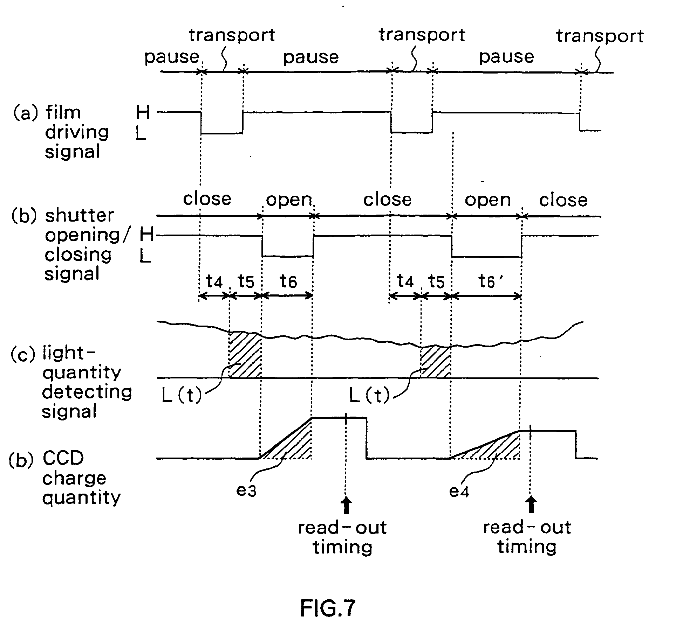

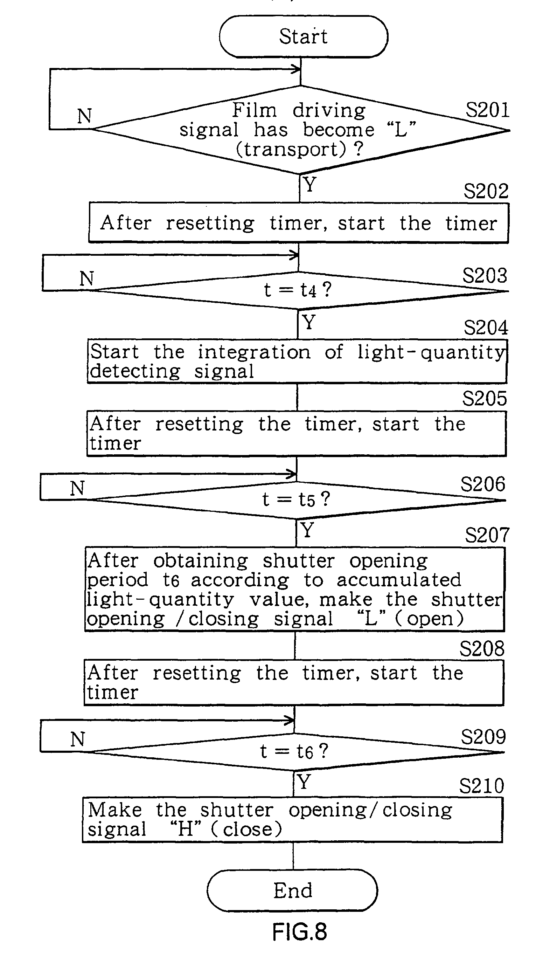

Next, the operation and the effect of the image projection converting apparatus 10b having such configuration, will now be described making reference to FIG. 7 and FIG. 8. Fig. 7 shows the operation timing of the image projection converting apparatus 10b, and (a) ∼ (d) in the figure correspond to (a)~(d) in FIG. 5. And FIG.8 shows the operation of the shutter controller 71b.

When the movie film 1 starts running at the point of changing of the film driving signal 74 from "H" level to "L" level(FIG. 8 step S201; Y), the shutter controller 71b resets a timer not shown in figures, and begins time-count operation (step S202). The shutter controller 71b begins the integration of the light-quantity detecting signal 44 (step S204), when the time-count value reaches to a fixed value t4 shown in FIG. 7(b) (step S203; Y). At the same time, the shutter controller 71b begins the time-count operation after resetting a timer not shown in figures(step S205).

The shutter controller 71b finishes the integration of the light-quantity detecting signal 44 to obtain the integral L(t) of light-quantity, when the time-count value reaches to a fixed value t5 shown in FIG. 7(b) (step S206; Y). The shutter controller 71b obtains shutter opening period t6 based on the integral L(t) of light-quantity, and opens the shutter 73 of the shutter mechanism 70 by changing the shutter opening/closing signal 72 from "H" level to "L" level(step S207). At the same time, the shutter controller 71b begins time-count operation after resetting a timer not shown in figures(step S208). The shutter opening period t6 corresponds to one example of the 'light-path opening period' of the invention, and the integral L(t) of light-quantity to one example of the 'accumulated light-quantity' of the invention.

The shutter opening period t6 is obtained by expression (2) below, using coefficient α (t) given by expression (1) below.

$$\alpha(t) = 1 + (L2 - L(t)) / L2 \quad \cdots(1)$$

$$t6 = \tau \times \alpha(t) \quad \cdots(2)$$

L2 represents reference accumulated light-quantity, and τ represents reference shutter opening period corresponds to the reference accumulated light-quantity L2.

As is obvious from expression (1) and (2), the shutter opening period t6 changes according to the magnitude of the obtained integral L(t) of light-quantity. To be more specific, the shutter opening period t6 is shorter than τ when L2<L(t), and shutter opening period t6' is longer than τ when L2>L(t) as shown in FIG.7(c).

When the shutter 73 of the shutter mechanism 70 is opened, light from the light-emission lamp 41a is projected onto the image frame of the movie film 1, projecting the image onto the CCD of the shooter 60. Hereby, the accumulation of the charge corresponding to the projected image starts in the CCD of the shooter 60 as shown in FIG. 7(d).

The shutter controller 71b closes the shutter 73 of the shutter mechanism 70 by changing the shutter opening/closing signal 72 to "H" level(step S210), when the time-count value of the timer reaches to the value t6, obtained at the step S207(step S209; Y).

When the shutter 73 of the shutter mechanism 70 is closed, light from the light-emission lamp 41a is interrupted, and the charge accumulation in the CCD of the shooter 60 finishes. The charge accumulated in the CCD of the shooter 60 is read at the readout-timing in the following (FIG. 7(d)), and recorded in such as video tape as a video signal after several kinds of signal processing.

In this way, according to the image projection converting apparatus 10b, the light-quantity detecting signal 44 is previously integrated for a given period obtaining the integral L(t) of light-quantity, before opening the shutter 73 of the shutter mechanism 70, and the opening period of the shutter 73 (i.e. light-path closing timing) is changed according to the magnitude of the integral L(t) of light-quantity. Hereby, the accumulated exposure quantity of the movie film 1 is regulated to be constant, regardless of the magnitude of the light-emission quantity of the light-emission lamp 41a. As a result, the charge-quantity accumulated in the CCD of the shooter 60 will not be effected by the light-quantity variation of the light-emission lamp 41a, and the accumulated charge-quantity becomes nearly constant(e3=e4 in FIG. 7(d)) if the transmissivity of the movie film 1 is constant. Therefore, the video signal obtained through the shooter 60 hardly includes intensity variation(flicker) caused by light-quantity variation of the light-emission lamp 41a. Furthermore, the intensity level of the obtained video signal is maintained constant, even the light-quantity of the light-emission lamp 41a reduces through secular changes.

Though a couple of embodiments were given to explain the invention so far, the invention may be embodied in various other ways not being limited to these embodiments. For example, although an image projection apparatus called telecinematography apparatus, performing electronization of a projected image by a pickup device is illustrated as an example in the above-mentioned embodiments, the invention is also applicable for example in a normal projector, performing image projection onto a screen, or in a liquid-crystal projector.

According to an image projecting apparatus of embodiments of the invention, the light-quantity emitted from the luminous body is detected, and as the accumulated projected light-quantity onto the recording medium is regulated to be constant by performing closing or opening of the light-path from the luminous body to the recording medium. As a result, it becomes possible to avoid the intensity variation of the projected image caused by the light-quantity variation of the luminous body. Furthermore, the intensity level of the projected image will be maintained in a proper condition, regardless of the secular changes of the light-quantity of the luminous body.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

It is therefore to be understood that within the scope of the appended claims the invention may be practised otherwise than as specifically described.

## Claims

1. An image projecting apparatus arranged to perform image projection by projecting light onto a recording medium in which an image is recorded, the apparatus comprising:

   a luminous body (41a) arranged to emit light to be projected along a light path onto the recording medium;
   light path modifying means (70) arranged in said light path from the luminous body (41a) to the recording medium;
   light detector means (43); and
   control means (71a;71b) arranged to control the light path modifying means (70);

   **characterised in that**:

   said light path modifying means (70) comprises light path opening/closing means arranged to open and close said light path from the luminous body (41 a) to the recording medium;
   said light detector means (43) is arranged between the luminous body (41a) and the light path opening /closing means (70) to detect the light-quantity emitted from the luminous body (41 a); and
   said control means (71 a; 71b) is arranged to control the opening/closing operation of said light-path opening/closing means (70) based on the result of the detection by said light detector means (43) in such a manner as to make the accumulated light-quantity projected onto the recording medium constant.

2. An image projecting apparatus according to claims 1, wherein said control means (71a) is arranged to begin the accumulation of the light-quantity detected by said detector means (43) at the point of making said light-path opening/closing means (70) adopt the state in which the light-path is opened, and is arranged to make said light-path opening/closing means (70) adopt the state in which the light-path is closed at the point that the accumulated light-quantity has reached a prescribed value.

3. An image projecting apparatus according to claim 1, wherein said control means (71b) is arranged to accumulate the light-quantity detected by said detector means (43) for a given period before making said light-path opening/closing means (70) adopt the state in which the light-path is opened, while obtaining an opening period of said light-path by said light-path opening/closing means (70) based on the accumulated light-quantity, and is arranged to make said light-path opening/closing means (70) adopt the state in which the light-path is opened for the obtained opening period of said light-path.

4. An image projecting apparatus according to any one of claims 1 to 3, wherein said light-path opening/closing means (70) comprises a liquid-crystal shutter.

5. An image projecting apparatus according to any one of claims 1 to 4, suitable for performing image projection by projecting light onto a recording medium, in which an image is recorded, that is a movie film.

6. An image projecting apparatus according to claim 5, wherein:

transport means is arranged to transport the movie film (1) intermittently in one direction; said light-path opening/closing means (70) for opening/closing said light-path is a liquid-crystal shutter; and said control means (71a, 71b) is arranged to control the opening operation of said light-path opening and closing means (70) in synchronization with the intermittent transportation of a movie film, while controlling the closing operation of said light-path opening/closing means (70) based on the result of the detection by said detector (43) in order to make the accumulated light-quantity projected onto the recording medium constant.

**Patentansprüche**

1. Bildprojektionsvorrichtung, welche eingerichtet ist, Bildprojektion durch Projizieren von Licht auf ein Aufzeichnungsmedium durchzuführen, auf welchem ein Bild aufgezeichnet ist, wobei die Vorrichtung aufweist:

einen Leuchtkörper (41a), der eingerichtet ist, Licht zu emittieren, welches längs eines Lichtpfads auf das Aufzeichnungsmedium projiziert wird; eine Lichtpfad-Modifizierungseinrichtung (70), welche im Lichtpfad vom Leuchtkörper (41a) zum Aufzeichnungsmedium angeordnet ist; eine Lichterfassungseinrichtung (43); und eine Steuereinrichtung (71a, 71b), die eingerichtet ist, die Lichtpfad-Moditizierungseinrichtung (70) zu steuern;

**dadurch gekennzeichnet, dass**
die Lichtpfad-Modifizierungseinrichtung (70) eine Lichtpfad-Öffnungs/Sclilleßeinrichtung aufweist, die eingerichtet ist, den Lichtpfad vom Leuchtkörper (41a) zum Aufzeichnungsmedium zu öffnen und zu schließen; die Lichterfassungseinrichtung (43) zwischen dem Leuchtkörper (41a) und der Lichtpfad-Öffnungs-/Schließeinrichtung (70) angeordnet ist, um die Lichtmenge, welche vom Leuchtkörper (41a) emittiert wird, zu erfassen; und die Steuereinrichtung (71a; 71b) eingerichtet ist, den Öffnungs/Schließbetrieb der Lichtpfad-Öffnungs-/Schließeinrichtung (70) auf Basis des Ergebnisses der Erfassung durch die Lichterfassungseinrichtung (43) in einer Weise zu steuern, um die akkumulierte Lichtmenge, welche auf das Aufzeichnungsmedium projiziert wird, konstant zu machen.

2. Lichtprojektionsvorrichtung nach Anspruch 1, wobei die Steuereinrichtung (71a) eingerichtet ist, die Akkumulierung der Lichtmenge, welche durch die Erfassungseinrichtung (43) erfasst wird, an dem Punkt zu beginnen, wo veranlasst wird, dass die Lichtpfad-Öffnungs-/Schließeinrichtung (70) den Zustand annimmt, bei dem der Lichtpfad geöffnet ist, und eingerichtet ist, zu veranlassen, dass die Lichtpfad-Öffnungs-/Schließeinrichtung (70) den Zustand annimmt, bei welchem der Lichtpfad an dem Punkt geschlossen ist, wo die akkumulierte Lichtmenge einen vorgeschriebenen Wert erreicht hat.

3. Bildprojektionsvorrichtung nach Anspruch 1, wobei die Steuereinrichtung (71b) eingerichtet ist, die Lichtmenge, welche durch die Erfassungseinrichtung (43) erfasst wird, für eine bestimmte Zeitperiode zu akkumulieren, bevor veranlasst wird, dass die Lichtpfad-Öffnungs-/Schließeinrichtung (70) den Zustand annimmt, in welchem der Lichtpfad geöffnet ist, während eine Öffnungsperiode des Lichtpfads durch die Lichtpfad-Öffnungs-/Schließeinrichtung (70) auf Basis der akkumulierten Lichtmenge erlangt wird, und eingerichtet ist, zu veranlassen, das die Lichtpfad-Öffnungs-/Schließeinrichtung (70) den Zustand annimmt, in welchem der Lichtpfad für die erlangte Öffnungsperiode des Lichtpfads geöffnet ist.

4. Bildprojektionsvorrichtung nach einem der Ansprüche 1 bis 3, wobei die Lichtpfad-Öffinmgs-/Schließeinrichtung (70) einen Flüssigkristallverschluss aufweist.

5. Bildprojektionsvorrichtung nach einem der Ansprüche 1 bis 4, welche zum Durchführen von Bildprojektion durch Projizieren von Licht auf ein Aufzeichnungsmedium geeignet ist, auf welchem ein Bild, welches ein Kinofilm ist, aufgezeichnet ist.

6. Bildprojektionsvorrichtung nach Anspruch 5, wobei:

eine Transporteinrichtung eingerichtet ist, den Kinofilm (1) in einer Richtung intermittierend zu transportieren; die Lichtpfad-Öffimngs-/Schließeinrichtung (70) zum Öffnen/Schließen des Lichtpfads ein Flüssigkristallverschluss ist; und

die Steuereinrichtung (71a, 71b) eingerichtet ist, den Öffnungsbetrieb der Lichtpfad-Öffnungs-/Schließeinrichtung (70) synchron mit dem intermittierenden Transport eines Kinofilms zu steuern, während der Schließbetrieb der Lichtpfad-Öffnungs-/Schließeinrichtung (70) auf Basis des Ergebnisses der Erfassung durch die Erfassungseinrichtung (43) gesteuert wird, um die akkumulierte Lichtmenge, welche auf das Aufzeichnungsmedium projiziert wird, konstant zu machen.

**Revendications**

1. Appareil de projection d'image agencé pour réaliser une projection d'image en projetant une lumière sur un support d'enregistrement sur lequel une image est enregistrée, l'appareil comprenant :

   un corps lumineux (41 a) agencé de manière à émettre de la lumière destinée à être projetée suivant un chemin lumineux sur le support d'enregistrement ;
   un moyen de modification de chemin lumineux (70) agencé dans ledit chemin lumineux depuis le corps lumineux (41 a) jusqu'au support d'enregistrement ;
   un moyen de détecteur de lumière (43) ; et
   un moyen de commande (71 a ; 71 b) agencé pour commander le moyen de modification de chemin lumineux (70),

   **caractérisé en ce que** :

   ledit moyen de modification de chemin lumineux (70) comprend un moyen d'ouverture/de fermeture de chemin lumineux agencé pour ouvrir et fermer ledit chemin lumineux depuis le corps lumineux (41 a) jusqu'au support d'enregistrement ;
   ledit moyen de détecteur de lumière (43) est agencé entre le corps lumineux (41a) et le moyen d'ouverture/de fermeture de chemin lumineux (70) afin de détecter la quantité de lumière émise depuis le corps lumineux (41 a) ; et
   ledit moyen de commande (71 a; 71 b) est agencé pour commander l'opération d'ouverture/de fermeture dudit moyen d'ouverture/de fermeture de chemin lumineux (70) sur la base du résultat de la détection par ledit moyen de détecteur de lumière (43) de manière à faire en sorte que la quantité de lumière accumulée qui est projetée sur le support d'enregistrement soit constante.

2. Appareil de projection d'image selon la revendication 1, dans lequel ledit moyen de commande (71a) est agencé pour commencer l'accumulation de la quantité de lumière détectée par ledit moyen de détecteur (43) au niveau du point au niveau duquel ledit moyen d'ouverture/de fermeture de chemin lumineux (70) adopte l'état dans lequel le chemin lumineux est ouvert et est agencé pour faire en sorte que ledit moyen d'ouverture/de fermeture de chemin lumineux (70) adopte l'état dans lequel le chemin lumineux est fermé au niveau du point au niveau duquel la quantité de lumière accumulée a atteint une valeur prescrite.

3. Appareil de projection d'image selon la revendication 1, dans lequel ledit moyen de commande (71 b) est agencé pour accumuler la quantité de lumière détectée par ledit moyen de détecteur (43) pendant une période donnée avant de faire en sorte que ledit moyen d'ouverture/de fermeture de chemin lumineux (70) adopte l'état dans lequel le chemin lumineux est ouvert tout en obtenant une période d'ouverture dudit chemin lumineux au moyen dudit moyen d'ouverture/de fermeture de chemin lumineux (70) sur la base de la quantité de lumière accumulée et est agencé de manière à faire en sorte que ledit moyen d'ouverture/de fermeture de chemin lumineux (70) adopte l'état dans lequel le chemin lumineux est ouvert pendant la période d'ouverture obtenue dudit chemin lumineux.

4. Appareil de projection d'image selon l'une quelconque des revendications- 1 à 3, dans lequel ledit moyen d'ouverture/de fermeture de chemin lumineux (70) comprend un obturateur à cristaux liquides.

5. Appareil de projection d'image selon l'une quelconque des revendications 1 à 4, convenant pour réaliser une projection d'image en projetant de la lumière sur un support d'enregistrement sur lequel une image est enregistrée, lequel support est un film cinématographique.

6. Appareil de projection d'image selon la revendication 5, dans lequel :

   un moyen de transport est agencé pour transporter le film cinématographique (1) par intermittence dans une direction ;
   ledit moyen d'ouverture/de fermeture de chemin lumineux (70) pour ouvrir/fermer ledit chemin lumineux est un obturateur à cristaux liquides ; et
   ledit moyen de commande (71 a, 71 b) est agencé pour commander l'opération d'ouverture dudit moyen d'ouverture et de fermeture de chemin lumineux (70) en synchronisation avec le transport intermittent d'un film cinématographique tout en commandant l'opération de fermeture dudit moyen d'ouverture/de fermeture de chemin lumineux (70) sur la base du résultat de la détection par ledit détecteur (43) afin de faire en sorte que la quantité de lumière accumulée projetée sur le support d'enregistrement soit constante.

FIG.1

EP 0 942 607 B1

44

46

461    462

461
AMP    462
LPF    $V(t)$    463    45
$-$

+ power
464    $V_1$
+

FIG.2

detected light-quantity voltage $V(t)$

$\Delta V(t)$

5 seconds

0                                                          time t

FIG.3

FIG.4

EP 0 942 607 B1

FIG.5

```
                    ┌─────────────┐
                    │    Start    │
                    └──────┬──────┘
                           │
        ┌──────────────────▼──────────────────┐
   ┌─ N │        Film  driving                 │ S101
   │    │   signal  has  become  "H"           │
   │    │          (pause) ?                   │
   │    └──────────────────┬──────────────────┘
   │                       │ Y
   │    ┌──────────────────▼──────────────────┐ S102
   │    │ After  resetting  timer, start  the  timer │
   │    └──────────────────┬──────────────────┘
   │                       │
   │    ┌──────────────────▼──────────────────┐
   ┌─ N │            t = t₁ ?                   │ S103
   │    └──────────────────┬──────────────────┘
   │                       │ Y
   │    ┌──────────────────▼──────────────────┐ S104
   │    │ Make shutter opening / closing signal │
   │    │ "L" (open), and  start  the integration │
   │    │ of  light-quantity  detecting  signal │
   │    └──────────────────┬──────────────────┘
   │                       │
   │    ┌──────────────────▼──────────────────┐
   ┌─ N │          L(t) = L₁ ?                  │ S105
   │    └──────────────────┬──────────────────┘
   │                       │ Y
   │    ┌──────────────────▼──────────────────┐ S106
   │    │ Make  the  shutter  opening/closing   │
   │    │ signal   "H" (close)                  │
   │    └──────────────────┬──────────────────┘
   │                       │
                    ┌──────▼──────┐
                    │     End     │
                    └─────────────┘
```

**S101**: Film driving signal has become "H" (pause) ? — N / Y

**S102**: After resetting timer, start the timer

**S103**: $t = t_1$ ? — N / Y

**S104**: Make shutter opening / closing signal "L" (open), and start the integration of light-quantity detecting signal

**S105**: $L(t) = L_1$ ? — N / Y

**S106**: Make the shutter opening/closing signal "H" (close)

FIG.6

FIG.7

## Start

S201 — Film driving signal has become "L" (transport)? — N

Y

**S202** After resetting timer, start the timer

**S203** t = t4 ? — N

Y

**S204** Start the integration of light-quantity detecting signal

**S205** After resetting the timer, start the timer

**S206** t = t5 ? — N

Y

**S207** After obtaining shutter opening period t6 according to accumulated light-quantity value, make the shutter opening / closing signal "L" (open)

**S208** After resetting the timer, start the timer

**S209** t = t6 ? — N

Y

**S210** Make the shutter opening/closing signal "H" (close)

## End

FIG.8

**EP 0 942 607 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5528288 A